# EUROPÄISCHE PATENTSCHRIFT

(11) **EP 3 415 469 B1**
(45) Veröffentlichungstag und Bekanntmachung des Hinweises auf die Patenterteilung: **11.09.2019**
(21) Anmeldenummer: 17176040.8
(22) Anmeldetag: 14.06.2017
(51) Int. Cl.: C01B 32/956, H01M 4/36, H01M 4/38, H01M 4/58, H01M 4/02, H01M 10/0525

(54) **SYNTHESE VON SILICIUM-KOHLENSTOFF-KOMPOSIT IN EINEM GASPHASENREAKTOR**
SYNTHESIS OF SILICON-CARBON COMPOSITE IN A GAS-PHASE REACTOR
SYNTHÈSE DE COMPOSITE DE SILICIUM/CARBONE DANS UN RÉACTEUR À PHASE GAZEUSE

(43) Veröffentlichungstag der Anmeldung: 19.12.2018
(73) Patentinhaber: Evonik Degussa GmbH, 45128 Essen (DE)
(72) Erfinder: Lang, Dr., Jürgen Erwin, 76229 Karlsruhe (DE); Wiggers, Dr., Hartmut, 48734 Reken (DE); Schulz, Prof. Dr., Christof, 50674 Köln (DE); Orthner, Dr. Hans, 47058 Duisburg (DE); Kovacevic, Jasmina, 45147 Essen (DE)
(74) Vertreter: Evonik Patent Association

(56) Entgegenhaltungen:
- EP-A1- 0 421 314
- EP-A1- 3 026 012
- WO-A1-79/00178

## Beschreibung

Die Erfindung betrifft ein Verfahren zur Herstellung eines Silicium-Kohlenstoff-Komposites, das als Komposit oder als Anodenmaterial in Lithium-Ionen-Batterien verwendet werden kann.

Silicium-Komposite haben großes Potential als Anodenmaterial in Lithiumionenbatterien. Aufgrund der großen Volumenänderung des Siliciums beim wiederholten Laden/Entladen sind diese Silicium-Komposite als Anodenmaterial nicht brauchbar.

Es wurden daher intensive Anstrengungen unternommen, die Zyklenstabilität durch Verwendung von Kompositen von Silicium-Graphit, Graphen-Nanosilicium, Silicium-Kohlenstoff-Nanoröhrchen, Silicium-Kohlenstoff-Nanodrähte, Silicium umhüllter Kohlenstoff und Kohlenstoff umhülltes Silicium zu verbessern. Methoden zur Herstellung dieser Komposite sind beispielsweise Pyrolyse, Vermahlung oder CVD-Prozesse. (Zhang et al., Nanoscale, 5 (2013) 5384 und Kasavajjula et al., Journal Power Sources 163 (2007) 1003).

Magasinki et al., Nat. Mater. 9 (2010) 353, beschreiben die Herstellung eines Silicium-Kohlenstoff-Komposites ausgehend von Monosilan und Propen in einem Zweistufen-CVD-Prozess. In einem ersten Schritt wird Silicium auf einem Träger aufgebracht, indem man im Vakuum ein SiH₄/He-Gemisch bei 700°C in einen Rohrreaktor einbringt. Nachfolgend wird auf dieses Silicium Kohlenstoff aufgebracht, indem man unter den oben genannten Bedingungen Propen in den Rohrreaktor einbringt.

In WO2011/006698 wird ein Verfahren zur Herstellung eines nanostrukturierten Silicium-Kohlenstoff-Komposites offenbart, bei dem zu einem kohlenstoffhaltigen Gemisch, welches durch Reaktion einer hydroxyaromatischen Verbindung mit einem Aldehyden hergestellt wird, ein submikrones Siliciumpulver gibt und das Gemisch bei 500 bis 1200 °C carbonisiert.

Eine weitere Variante ist nach Wang et al., Electrochem. Commun. 6 (2004), 689, die Zugabe von nanokristallinem Siliciumpulver zu einer gelierenden Resorcin/Formaldehyd-Mischung, die für 10 Stunden bei 85°C aushärtet. Diese Mischung ist ein kompakter Block, der bei 650°C zu einem Silicium-Kohlenstoff-Komposit mit 40 % Kohlenstoff umgesetzt wird.

In EP-A-2782167 wird ein Verfahren zur Herstellung eines Si/C-Komposites offenbart, bei dem Silicium und Lignin bei wenigstens 400°C in einer inerten Gasatmosphäre zur Reaktion gebracht werden.

In US2009029256 wird ein Verfahren zur Herstellung eines Si / Kohlenstoff-Komposites offenbart, bei dem man eine Mischung aus Erdalkalimetall und der Kieselsäure / Kohlenstoff-Komposit in einer inerten Atmosphäre erhitzt.

Die Offenlegungsschrift DE 102009033251 A1 schlägt ein dreistufiges Verfahren zur Herstellung eines Komposits aus Silicium-Kohlenstoff oder Silicium-Zinn vor. Dabei werden Si- oder Sn-Nanopartikel erzeugt und anschließend in ein organisches Polymer eingebracht. Im dritten Schritt wird das System aus polymerer Matrix und den Nanopartikeln pyrolysiert.

Die Patentanmeldung DE 102016203324.7 offenbart ein Verfahren zur Herstellung eines Silicium-Kohlenstoff-Kompositpulvers, bei dem ein Silan in einem Kohlenwasserstoff enthaltenden Gasstrom in einem Heißwandreaktor zur Umsetzung gebracht wird.

Zudem werden in den Patentanmeldungen WO 79/00178 A1 und EP 0 421 314 A1 Verfahren zur Herstellen von SiC-Pulvern offenbart.

Die Patentanmeldung EP 3 026 012 A1 beschreibt ein Verfahren zur Herstellung eines SiC/Si-Pulvers.

Konventionelle Verfahren umfassen oft mehr als zwei Stufen, sind also aufwändig, oder sie haben den Nachteil, nur geringe, labortypische Mengen zu erbringen. Letzteres liegt beispielsweise daran, dass sich unzersetzte Prekursoren im Innern der Vorrichtung ablagern und wiederkehrend unter Außerbetriebsetzung der Vorrichtung entfernt werden müssen. Somit können solche Verfahren oft nicht über längere Zeit stabil im Lauf gehalten werden.

Die vorliegende Erfindung löst die Aufgabe, ein Verfahren bereitzustellen, welches in weniger Schritten und unter Verwendung großtechnisch verfügbarer Einsatzstoffe die Herstellung eines Komposits auf Basis von Silizium und Kohlenstoff ermöglicht.

Gegenstand der Erfindung ist ein Verfahren zur Herstellung eines Silicium-SiC-Kompositpulvers, das dadurch gekennzeichnet ist, das man
a) einen Gasstrom I, enthaltend zumindest ein Silan, ausgewählt aus SiH₄, Si₂H₆ und/oder Si₃H₈, und enthaltend zumindest einen Kohlenwasserstoff, ausgewählt aus Ethen und/oder Acethylen, und einen koaxialen Gasstrom II enthaltend Wasserstoff in einen Heißwandreaktor einströmt, wobei der Gasstrom II den Mantelstrom bezogen auf den Gasstrom I bildet, und man
b) zumindest den Gasstrom I bei einer Temperatur von 900 °C bis 1100 °C zur Reaktion bringt, und anschließend am Ausgang des Heißwandreaktors das Reaktionsgemisch abkühlt oder abkühlen lässt und das pulverförmige Reaktionsprodukt von gasförmigen Stoffen abtrennt.

Das Verfahren hat den Vorteil, dass der Wasserstoff im Gasstrom II als koaxial eingedüstes Schleiergas als Wärmeüberträger von der heißen Reaktorwand in die Kernströmung des Gasstromes I dient. Ein weiterer Vorteil besteht darin, dass mit dem koaxial eingedüsten Gasstrom I Ablagerungen unzersetzter Prekursoren vermieden werden. In der konventionellen Technik werden Ablagerungen beispielsweise durch CVD-Prozesse verursacht.

Das Verfahren gemäß der Erfindung wird im Folgenden näher erläutert.

Vorzugsweise wird der Gasstrom I, besonders bevorzugt beide Gasströme jeweils als homogene Mischung eingedüst. Ganz besonders bevorzugt wird in den Heißwandreaktor zumindest eine Koaxialdüse eingesetzt, wobei der Gasstrom I als Kernstrom und der Gasstrom II als Mantelstrom eingedüst werden. Weiterhin kann es vorteilhaft sein, in dem erfindungsgemäßen Verfahren ein beheiztes Reaktionsrohr als Heißwandreaktor einzusetzen, wobei die Achse der Koaxialdüse mit der Hauptachse des Reaktionsrohres zusammenfällt. Besonders bevorzugt wird der Heißwandreaktor laminar durchströmt.

Des Weiteren kann es vorteilhaft sein, in den Gasstrom I Ethen oder Acetylen einzusetzen und zusätzlich Argon einzusetzen. Dabei ist es bevorzugt, in dem Gasstrom I Silizium und Kohlenstoff in einem stöchiometrischen Verhältnis, vorzugsweise im Verhältnis von 20:1 bis 1:10, besonders bevorzugt von 1:1 einzusetzen. Wird im Gasstrom I Monosilan eingesetzt und Ethan oder Acethylen gewählt, wird vorzugsweise der im Vergleich zum Volumenstrom des oder der Silane fehlende Volumenstrom des oder der Kohlenwasserstoffe durch ein Edelgas Volumenstrom ersetzt, vorzugsweise durch Argon Volumenstrom.

In dem erfindungsgemäßen Verfahren können in dem Heißwandreaktor zumindest zwei Heizzonen eingesetzt werden, wobei vorzugsweise die erste Heizone auf eine Temperatur von 900 °C bis 1010 °C gebracht, und die zweite Heizzone auf eine Temperatur von 1000 °C bis 1100 °C, vorzugsweise von 1050 °C bis 1100 °C gebracht wird.

Treten die Gasströme I und II in das oder die beheizten Reaktionsrohre des Heißwandreaktors ein, passieren Kern- und Mantelstrom zunächst die erste Heizzone des Reaktionsrohres und anschließend die zweite Heizzone. Vorzugsweise verfügt der Heißwandreaktor über mehrere Heizzonen, die die strömenden Gase bzw. der durch die allmähliche Durchmischung beider Gasströme und Umsetzungsreaktionen resultierende Gesamtstrom nacheinander durchlaufen. Besonders bevorzugt wird ein Reaktionsrohr mit zwei Heizzonen eingesetzt. Werden Ethen und Monosilan eingesetzt, kann es vorteilhaft sein, 980 °C in der ersten Heizzone und 1050 °C in der zweiten Heizzone einzustellen.

Das erfindungsgemäße Verfahren stellt Si/C Komposits in Form eines pulverartigen Gemisches oder Pulvers bereit, in welchem Si und SiC gemischt vorliegen. Das Pulver kann als Elektrodenmaterial in Batterien oder Sekundärzellen verwendet werden.

### Beispiele

In den erfindungsgemäßen Beispielen wurde ein Heißwandreaktor eingesetzt, der eine koaxiale Düse zum Einleiten der Gasströme I und II in das geheizte Reaktionsrohr aufwies. Der Gasstrom I wurde als homogenes Gemisch als Kernströmung eingeleitet, während der Gasstrom II Wasserstoff enthielt und als koaxial eingedüstes Schleiergas eingeströmt wurde. Abgesehen von geringer lokaler Turbulenz am Düsenaustritt wurde der Heißwandreaktor somit laminar durchströmt. Der Wasserstoff diente dabei als Wärmeüberträger von der heißen Reaktorwand in die Kernströmung.

Der Heißwandreaktor wies am Ausgang bei allen erfindungsgemäßen Beispielen ein Filter mit mehreren Filtereinsätzen auf, mittels derer das Produkt aufgefangen wurde. Die Filtereinsätze wurden am Abschluss des jeweiligen Beispiels mit Stickstoff von dem Produkt befreit. Das Produkt wurde über ein Schleusensystem unter inerten Bedingungen abgefüllt und gewogen.

### Beispiele: Herstellung eines SiC Komposits unter Einsatz von Ethen bzw. Acetylen.

Die Zusammensetzungen der Gasströme I und II sind in der **Tabelle 1** zusammengefasst. Die Angaben bei den eingesetzten Substanzen beziehen sich jeweils auf den Volumenstrom [slm].

**Tabelle 1: Gasströme und Temperaturen.**

| | **Gasstrom I** | | | **II** | | |
|---|---|---|---|---|---|---|
| | SiH₄ | Kohlenwasserstoff | Argon | H₂ | Temperatur Heizzone 2 | Temperatur Heizzone 1 |
| **Versuch 2** | 5 | Ethen / 2,5 | 2,5 | 70 | 1050 °C | 980 °C |
| **Versuch 4** | 5 | Ethen / 2,5 | 2,5 | 35 | 1100 °C | 1010 °C |
| **Versuch 6** | 10 | Ethen / 5 | 0 | 30 | 1100 °C | 970 °C |
| **Versuch 7** | 5 | Acetylen / 2,5 | 2,5 | 35 | 1100 °C | 985 °C |

Das Verhältnis Si zu C wurde bis auf Versuch 6 in allen Fällen stöchiometrisch eingestellt, und der Volumenstrom in der Kernströmung am Düsenausgang betrug in den Versuchen 2, 4, 7 jeweils 10 slm. Wiesen die eingesetzten Kohlenwasserstoffe im Vergleich zu hypothetisch einsetzbarem Methan einen geringeren Volumenstrom auf, wurde der fehlende Volumenstrom durch Argon ergänzt. Die Versuche wurden ununterbrochen im Lauf gehalten und erst dann abgebrochen, nachdem jeweils eine Menge an SiC Komposit von mindestens 1 kg erhalten worden war.

Der Heißwandreaktor verfügte über zwei Heizzonen, 1 und 2, von denen die Heizzone 1 eine Länge von etwa 40 cm hatte, während die Heizzone 2 eine Länge von etwa 50 cm aufwies. Die Temperaturen wurden jeweils mittig der Heizzonen von außen an der Reaktorwand gemessen.

Am Ausgang des Reaktors wurde das umgesetzte Gasgemisch gefiltert, das Produkt im Filter durch Rückspülen des Filtereinsatzes mit Stickstoff durchströmt und über ein Schleusensystem unter inerten Bedingungen abgefüllt. Bei allen Versuchen konnten die Produkte problemlos entnommen werden.

Beim Reinigen des Reaktors nach den jeweiligen Versuchen zeigten sich keinerlei Wandanbackungen oder Verkrustungen im Reaktionsrohr, und auch die koaxiale Düse blieb in beiden Beispielen frei.

Die Mengenverhältnisse und BET-Oberflächen des erfindungsgemäß erzeugten SiC zeigt Tabelle 2. Die Kristallitgrößen sind als mittlere Kristallitgrößen aufzufassen, deren Werte mittels der dem Fachmann bekannten Rietveld-Verfeinerung berechnet wurden.

**Tabelle 2.**

| | Verhältnis Si / SiC [Gew.-%] | Kristallitgröße Si [nm] | Kristallitgröße SiC [nm] | BET-Oberfläche [m²g⁻¹] |
|---|---|---|---|---|
| **Versuch 2** | 91 /9 | 11 | 5,5 | 29,4 |
| **Versuch 4** | 49/51 | 5 | 6 | 28,2 |
| **Versuch 6** | 54/46 | 3,5 | 7 | 24,4 |
| **Versuch 7** | 3/97 | 70 | 2,5 | 65 |

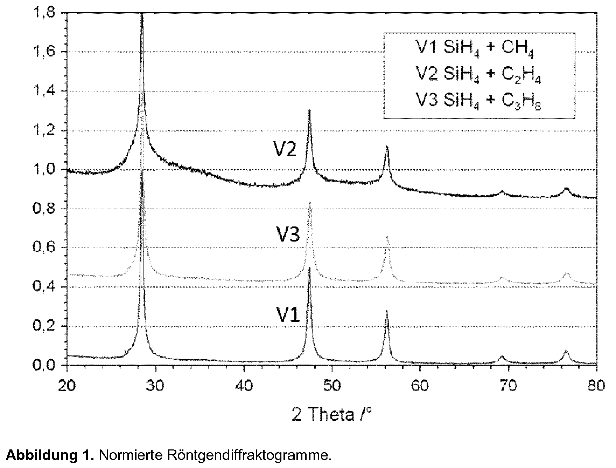

Die **Abbildung 1** zeigt mit der Linienform V2 das normierte Röntgendiffraktogramm des Produktes aus dem Versuch 2, der mit Ethen durchgeführt wurde. Im Vergleich dazu sind in dieselbe Abbildung die Diffraktogramme solcher Produkte eingezeichnet, die wie der Versuch 2 durchgeführt wurden, jedoch im Unterschied dazu anstelle mit Ethen mit Propan (V3) bzw. mit Methan (V1) im Gasstrom I. Bei der Ordinate wurden die bei der Röntgendiffraktometrie gewonnenen Zählraten durch willkürliche Einheiten ersetzt.

Im Unterschied zu den Linienformen V1 und V3 im Röntgendiffraktogramm Abb. 1 erkennt man aus der Linienform V2 ein sehr breites Signal bei 2Theta = 34°, das auf das Vorhandensein von SiC im Produkt hinweist.

An jedem Röntgendiffraktogramm wurde außerdem eine Rietveld-Verfeinerung durchgeführt, die die jeweiligen Massenanteile quantifizierte. Auf Basis der Rietveld-Verfeinerung erhielt man in dem Produkt V2 neben 91 Gew.-% Si etwa 9 Gew.% SiC, dagegen verschwindende Anteile SiC nach der Durchführung des Versuches mit Propan (V3) bzw. Methan (V1) anstelle von Ethen.

Die Versuche 4, 6 und 7 wurden wie der Versuch 2 durchgeführt, jedoch mit den Unterschieden, die aus der Tabelle 1 ersichtlich sind, dass
- in Heizzone 1 bzw. Heizzone 2 jeweils andere Temperaturen eingestellt worden waren, und
- außerdem höhere Verweilzeiten der Reaktanden des Gasstroms I eingestellt wurden, dadurch bewerkstelligt, dass im Gasstrom II ein geringerer Wasserstoffstrom gewählt worden war, nämlich 30 slm H₂ im Versuch 6 bzw. 35 slm H₂ bei den Versuchen 4 und 7, und
- ein anderes SiH₄ - Kohlenwasserstoff Mengenverhältnis bei Versuch 6 bzw. Acetylen bei Versuch 7 gewählt wurde.

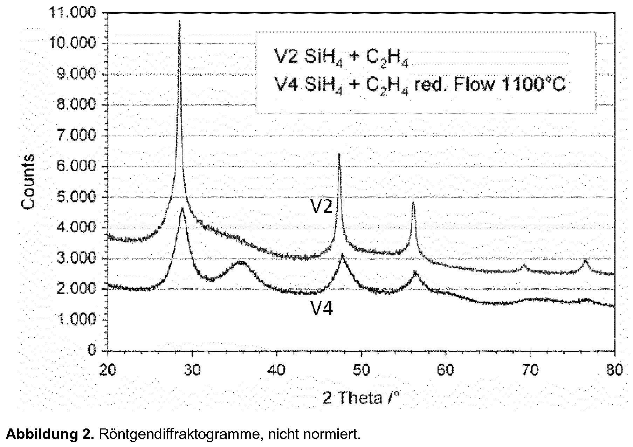

Die **Abbildung 2** zeigt die Röntgendiffraktogramme der Produkte aus dem Versuchen 2 und 4 jeweils in Zahlraten als Funktion des Winkels 2Theta [°].

Im Vergleich zu dem sehr breiten Signal bei 2Theta = 34° der Linienform des Versuches 2 belegt die Linienform des Versuches 4 bei 2Theta = 36° das Vorhandensein von SiC in einem weit höheren Gewichtsanteil, nämlich 51 Gew.-% (V4) gegenüber 9 Gew.-% (V2).

## Patentansprüche

1. Verfahren zur Herstellung eines Silicium-SiC-Kompositpulvers,
**dadurch gekennzeichnet**, das man
a) einen Gasstrom I
enthaltend zumindest ein Silan, ausgewählt aus SiH₄, Si₂H₆ und/oder Si₃H₈, und
enthaltend zumindest einen Kohlenwasserstoff, ausgewählt aus Ethen und/oder Acethylen,
und einen koaxialen Gasstrom II enthaltend Wasserstoff
in einen Heißwandreaktor einströmt, wobei der Gasstrom II den Mantelstrom bezogen auf den Gasstrom I bildet,
und man
b) zumindest den Gasstrom I bei einer Temperatur von 900 °C bis 1100 °C zur Reaktion bringt, und anschließend
am Ausgang des Heißwandreaktors das Reaktionsgemisch abkühlt oder abkühlen lässt und das pulverförmige Reaktionsprodukt von gasförmigen Stoffen abtrennt.

2. Verfahren nach Anspruch 1, wobei der Heißwandreaktor laminar durchströmt wird.

3. Verfahren nach Anspruch 1, wobei im Schritt a
in den Gasstrom I Ethen oder Acetylen eingesetzt und zusätzlich Argon eingesetzt wird.

4. Verfahren nach einem der vorhergehenden Ansprüche, **dadurch gekennzeichnet, dass** in dem Heißwandreaktor zumindest zwei Heizzonen eingesetzt werden, wobei vorzugsweise die erste Heizone auf eine Temperatur von 900 °C bis 1010 °C gebracht, und die
zweite Heizzone auf eine Temperatur von 1000 °C bis 1100 °C, vorzugsweise von 1050 °C bis 1100 °C gebracht wird.

## Claims

1. Process for producing a silicon-SiC composite powder, **characterized in that**
a) a gas stream I
containing at least one silane selected from SiH₄, Si₂H₆ and/or Si₃H₈
and
containing at least one hydrocarbon selected from ethene and/or acetylene
and a coaxial gas stream II
containing hydrogen
are fed into a hot wall reactor, wherein
the gas stream II forms the jacket stream with respect to the gas stream I,
and
b) at least the gas stream I is reacted at a temperature of 900°C to 1100°C and subsequently
at the outlet of the hot wall reactor the reaction mixture is cooled or allowed to cool and the pulverulent reaction product is separated from gaseous materials.

2. Process according to Claim 1, wherein a laminar flow through the hot wall reactor is established.

3. Process according to Claim 1, wherein in step a ethene or acetylene is employed and additionally argon is employed in the gas stream I.

4. Process according to any of the preceding claims, **characterized in that**
at least two heating zones are employed in the hot wall reactor, wherein preferably the first heating zone is brought to a temperature of 900°C to 1010°C and the
second heating zone is brought to a temperature of 1000°C to 1100°C, preferably of 1050°C to 1100°C.

## Revendications

1. Procédé de fabrication d'une poudre composite de silicium-SiC, **caractérisé en ce que**
a) un courant gazeux I,
contenant au moins un silane, choisi parmi SiH₄, Si₂H₆ et/ou Si₃H₈,
et
contenant au moins un hydrocarbure, choisi parmi l'éthène et/ou l'acétylène,
et un courant gazeux coaxial II,
contenant de l'hydrogène,
sont introduits dans un réacteur à parois chauffées, le courant gazeux II formant le courant d'enveloppe par rapport au courant gazeux I,
et
b) au moins le courant gazeux I est mis en réaction à une température de 900 °C à 1 100 °C, puis
le mélange réactionnel est refroidi ou laissé refroidir à la sortie du réacteur à parois chauffées, et le produit de réaction en poudre est séparé des matières gazeuses.

2. Procédé selon la revendication 1, dans lequel le réacteur à parois chauffées est traversé par un écoulement laminaire.

3. Procédé selon la revendication 1, dans lequel, à l'étape a, de l'éthène ou de l'acétylène est utilisé dans le courant gazeux I, et de l'argon est en outre utilisé.

4. Procédé selon l'une quelconque des revendications précédentes, **caractérisé en ce qu'**au moins deux zones de chauffage sont utilisées dans le réacteur à parois chauffées, la première zone de chauffage étant de préférence portée à une température de 900 °C à 1 010 °C, et la deuxième zone de chauffage étant portée à une température de 1 000 °C à 1 100 °C, de préférence de 1 050 °C à 1 100 °C.
